# EUROPEAN PATENT APPLICATION

(11) **EP 4 848 377 A1**
(43) Date of publication of application: **02.12.2026**
(21) Application number: 25861267.0
(22) Date of filing: 25.08.2025
(51) Int. Cl.: H01M 4/62, H01M 4/04, H01M 4/13, H01M 10/052, H01M 4/139, H01M 4/02

(54) **WATER-BASED BINDER FOR LITHIUM SECONDARY BATTERY, AND LITHIUM SECONDARY BATTERY INCLUDING SAME**

(30) Priority: 28.08.2024 KR 20240116057
(71) Applicant: LG Energy Solution, Ltd., Seoul 07335 (KR); Seoul National University R&DB Foundation, Seoul 08826 (KR)
(72) Inventor: KIM, Ki-Hyun, Daejeon 34122 (KR); LEE, Jong-Chan, Seoul 08830 (KR); LEE, Do-Joong, Daejeon 34122 (KR); KOONG, Chan-Yeong, Seoul 08789 (KR); KWON, Jin, Gwangmyeong-si, Gyeonggi-do 14244 (KR)
(74) Representative: Goddar, Heinz J.
(86) International application number: PCT/KR2025/012938
(87) International publication number: WO 2026/049451

(57) **Abstract**

The present disclosure relates to a binder that may be used in a lithium secondary battery, particularly a lithium-sulfur battery, wherein the binder is manufactured by reversible addition-fragmentation chain transfer (RAFT) polymerization reaction and has a structure including a polyalkyl methacrylate derived block and a polyacrylic acid derived block with a thiocarbonyl thio functional group at the center thereof, and an aliphatic functional group at an outermost terminal end. Accordingly, there is an effect of improving electrical conductivity of an electrode using the binder and suppressing dissolution of lithium polysulfides.

## Description

### TECHNICAL FIELD

The present disclosure relates to a water-based binder for use in electrodes of lithium secondary batteries. More particularly, the present disclosure relates to a water-based binder for use in positive electrodes of lithium-sulfur batteries using lithium metal negative electrodes and a lithium secondary battery including the same.

This application is based on and claims priority from Korean Patent Application No. 2024-0116057 filed on August 28, 2024 in the Republic of Korea, the disclosure of which is incorporated herein by reference in its entirety.

### BACKGROUND ART

As lithium secondary batteries are used in a wide range of applications including not only portable electronic devices but also electric vehicles (EV) and energy storage systems (ESS), there is an increasing demand for lithium secondary batteries with higher capacity, higher energy density and longer life.

Among lithium secondary batteries, lithium-sulfur batteries are a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material. In lithium-sulfur batteries, sulfur, the main component of the positive electrode active material has low atomic weight, is abundant and readily available all over the world, and has low price, low toxicity and eco-friendliness.

Furthermore, in lithium-sulfur batteries, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH batteries: 450 Wh/kg, Li-FeS batteries: 480 Wh/kg, Li-MnO₂ batteries: 1,000 Wh/kg, Na-S batteries: 800 Wh/kg) and lithium ion batteries (250 Wh/kg), lithium-sulfur batteries are gaining attention as a high-capacity, eco-friendly and low-cost lithium secondary battery among secondary batteries developed so far.

During discharging of lithium-sulfur batteries, as sulfur accepts electrons at the positive electrode, a reduction reaction proceeds, and in this instance, lithium polysulfides (Li₂Sₓ, x=2~8) are produced at the positive electrode, and some of them readily dissolve in an electrolyte solution, causing side reactions in the batteries, which makes the batteries degrade faster, and during charging, shuttle reactions occur, resulting in significant reductions in charge/discharge efficiency. By this reason, the specific capacity of lithium-sulfur batteries currently being developed is much lower than their theoretical specific capacity. Therefore, there is a need for development of lithium-sulfur batteries with specific capacity that is as high as the theoretical specific capacity level.

In particular, there is a need for development of technologies to suppress the decline in energy density due to the shuttle effect that causes a loss of the positive electrode active material.

### DISCLOSURE

### Technical Problem

The present disclosure is designed to address the above-described problems, and therefore the present disclosure is directed to providing a lithium-sulfur battery with specific capacity that is as high as the theoretical specific capacity level.

The present disclosure is further directed to providing a lithium-sulfur battery with high energy density.

### Technical Solution

To achieve the above-described objectives,
according to an aspect of the present disclosure, provided is a binder for a lithium secondary battery of the following embodiments.

The binder for the lithium secondary battery according to a first embodiment includes:
a thiocarbonyl thio functional group represented by the following Formula 1;
a first polyalkyl methacrylate derived block covalently bonded to one end of the thiocarbonyl thio functional group;
a second polyalkyl methacrylate derived block covalently bonded to the other end of the thiocarbonyl thio functional group;
a first polyacrylic acid derived block covalently bonded to an end of the first polyalkyl methacrylate derived block; and
a second polyacrylic acid derived block covalently bonded to an end of the second polyalkyl methacrylate derived block,
wherein an an organic functional group at an outermost terminal end includes an aliphatic functional group:

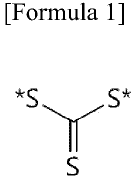

According to a second embodiment, in the first embodiment,
at least one carboxyl group (-COOH) in the first polyacrylic acid derived block and the second polyacrylic acid derived block may include a lithium-substituted carboxyl group (-COO⁻Li⁺).

According to a third embodiment, in the first or second embodiment,
the first polyacrylic acid derived block and the second polyacrylic acid derived block may include each independently 50 to 1500 acrylic acid repeating structures.

According to a fourth embodiment, in any one of the first to third embodiments,
the first polyalkyl methacrylate derived block and the second polyalkyl methacrylate derived block may include each independently 50 to 1500 alkyl methacrylate repeating structures.

According to a fifth embodiment, in any one of the first to fourth embodiments,
the alkyl included in at least one of the first polyalkyl methacrylate derived block or the second polyalkyl methacrylate derived block may include at least one of a polyethylene glycol repeating unit, a polypropylene glycol repeating unit or a polyethylene glycol-polypropylene glycol repeating unit.

According to a sixth embodiment, in any one of the first to fifth embodiments,
the alkyl may include 1 to 30 polyethylene glycol repeating units.

According to a seventh embodiment, in any one of the first to sixth embodiments,
the organic functional group at the outermost terminal end may include a lithium-substituted carboxyl group (-COO⁻Li⁺).

According to an eighth embodiment, in any one of the first to seventh embodiments,
a pH of a dispersion of the binder for the lithium secondary battery in water may be in a range of 6.2 to 7.8.

According to another embodiment of the present disclosure, provided is a method for manufacturing an electrode for a lithium secondary battery.

The method for manufacturing the electrode for the lithium secondary battery according to a ninth embodiment may include:
applying a slurry to at least one surface of a current collector and drying the slurry to obtain the electrode, the slurry including a mixture of the binder according to any one of the first to eighth embodiments, a sulfur-based compound and a conductive carbon material in an aqueous solvent.

According to a tenth embodiment, in the ninth embodiment,
the method may include obtaining the binder through a polymerization reaction of a reversible addition-fragmentation chain transfer (RAFT) initiator including an aliphatic functional group and a thiocarbonyl thio functional group, an alkyl methacrylate and an acrylic acid.

According to an eleventh embodiment, in the ninth or tenth embodiment,
before the polymerization reaction,
the method may further include preparing the RAFT initiator as a mixture of carbon disulfide (CS₂), trihalomethane and tetraalkylene ammonium bisulfate.

According to a twelfth embodiment, in any one of the ninth to eleventh embodiments,
the RAFT initiator may include S,S'-bis(R,R'-dimethyl-R''-acetic acid)-trithiocarbonate (BDAAT).

According to a thirteenth embodiment, in any one of the ninth to twelfth embodiments,
the method may include thermally treating a mixture of the sulfur-based compound and the conductive carbon material to obtain a sulfur-carbon composite, and
the slurry may be obtained by mixing the sulfur-carbon composite with the binder in the aqueous solvent.

According to a fourteenth embodiment, in any one of the ninth to thirteenth embodiments,
the obtained electrode may include the current collector and an active material layer present on at least one surface of the current collector, and
the active material layer may have a thickness of 250 µm or more.

According to still another embodiment of the present disclosure, provided is an electrode for a lithium secondary battery according to the following embodiments.

The electrode for the lithium secondary battery according to a fifteenth embodiment may include:
the binder according to any one of the first to eighth embodiments, a sulfur-based compound and a conductive carbon material.

According to yet another embodiment of the present disclosure, provided is a lithium secondary battery according to the following embodiments.

The lithium secondary battery according to a sixteenth embodiment may include:
the electrode according to the fifteenth embodiment.

### Advantageous Effects

The binder according to an aspect of the present disclosure includes the block containing the functional group capable of hydrogen bonding at the end and having high elasticity and ionic conductivity in the main chain. Through this, the binder according to an aspect of the present disclosure may have a beneficial effect on suppressing volume expansion when used in electrodes of lithium secondary batteries due to high elasticity characteristics. Furthermore, when the binder is used in positive electrodes of lithium-sulfur batteries, there is an advantage of suppressing the shuttle effect of lithium polysulfides that dissolve from the positive electrodes.

In particular, compared to the existing poly acrylic acid (PAA) binders, ionic conductivity of the binder may be dramatically improved by the block having high elasticity and ionic conductivity included in the main chain, and accordingly suitable binders for a water-based binder process may be produced, and by using the same, electrodes may be manufactured through a water-based process.

Accordingly, there is an advantage of providing lithium secondary batteries, particularly lithium-sulfur batteries having improved electrochemical performance over electrodes using the existing water-based binders such as PAA.

### BRIEF DESCRIPTION OF THE DRAWINGS

FIG. 1 shows 1H nuclear magnetic resonance (NMR) of an intermediate product during a synthetic process of Example 1 in this specification.
FIG. 2 shows 1H NMR of Example 1 in this specification.
FIG. 3 shows Fourier transform infrared spectroscopic (FT-IR) spectra of Examples 1 and 2 in this specification.
FIG. 4 shows 1H NMR of an intermediate product during a synthetic process of Example 3 in this specification.
FIG. 5 shows 1H NMR of Example 3 in this specification.
FIG. 6 shows FT-IR spectra of Examples 3 and 4 in this specification.
FIG. 7 is a scanning electron microscopic (SEM) image of surfaces of positive electrodes manufactured with the indicated thickness using a PAA binder, a binder of Example 1 and a binder of Example 2 according to an experimental example in this specification.
FIG. 8 is a graph showing measurement results of discharge capacity as a function of charge and discharge cycle according to an experimental example in this specification.
FIG. 9 is a graph showing measurement results of discharge capacity as a function of charge and discharge cycle according to an experimental example in this specification.

### BEST MODE

Hereinafter, the present disclosure will be described in more detail.

The terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define terms appropriately for the best explanation.

The terms as used herein are used to describe embodiments of the present disclosure but not intended to be limiting. The singular forms include the plural forms unless the context clearly indicates otherwise. It should be understood that the terms "comprise", "include" and "have" when used in this specification, specify the presence of the stated feature, figure, step, operation, element, component or a combination thereof, but do not preclude the presence or addition of one or more other features, figures, steps, operations, elements, components or a combination thereof.

The term "composite" as used herein refers to a combination of two or more materials with physically and chemically different phases and more effective functions.

The term "(poly)sulfide" as used herein is the concept including "(poly)sulfide ion (Sₓ²⁻, 1≤x⁻≤8)" and "lithium (poly)sulfide (Li₂Sₓ or Li₂Sₓ⁻, 1≤x ≤8)".

The term "polysulfide" used herein is the concept including "polysulfide ion (Sₓ²⁻ , 1<x⁻ ≤8)" and "lithium polysulfide (Li₂Sₓ or Li₂Sₓ⁻ 1<x ≤8)".

In lithium-sulfur batteries, during charging and discharging, lithium polysulfides produced by reduction reactions of sulfur (S₈) dissolve from positive electrodes into electrolyte solutions, resulting in lower battery capacity than theoretical capacity.

According to an aspect of the present disclosure, provided are a lithium-sulfur battery having improved electrochemical performance by suppressing dissolution of lithium polysulfides from positive electrode and improving electrical conductivity of electrodes, an electrode for the lithium-sulfur battery, and a binder for use in the lithium-sulfur battery. Further, provided is a binder for use in any other type of lithium secondary battery, and besides, an electrochemical device.

The binder for the lithium secondary battery according to an aspect of the present disclosure includes a thiocarbonyl thio functional group represented by the following Formula 1,
a first polyalkyl methacrylate derived block covalently bonded to one end of the thiocarbonyl thio functional group,
a second polyalkyl methacrylate derived block covalently bonded to the other end of the thiocarbonyl thio functional group,
a first polyacrylic acid derived block covalently bonded to one end of the first polyalkyl methacrylate derived block, and
a second polyacrylic acid derived block covalently bonded to one end of the second polyalkyl methacrylate derived block.

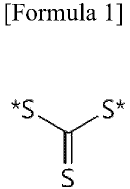

Specifically, an organic functional group at the outermost terminal end of the binder includes an aliphatic functional group.

In an embodiment of the present disclosure, the organic functional group at the outermost terminal end of the binder may be bonded to the outermost terminal end of each of the first polyacrylic acid derived block and the second polyacrylic acid derived block, and preferably, may be composed of the aliphatic functional group.

In an embodiment of the present disclosure, the structure of the binder may be, for example, represented by the following Chemical Formula 1, but the present disclosure is not limited thereto.

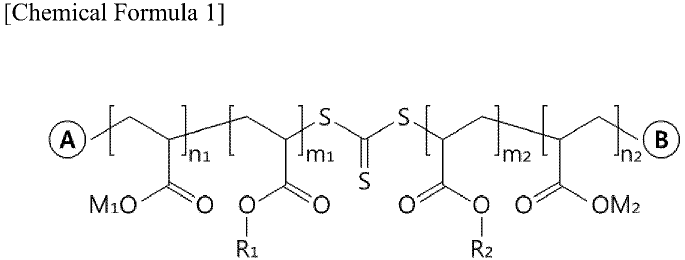

In the above Chemical Formula 1,
R₁ and R₂ are each independently at least one selected from Li⁺, H, C₁-C₅₀ alkyl_{,} -(C₂ H₄O)oM₅ (o=an integer of 1 to 20, M₅ =Li⁺, H or a direct bond) and -(C₃H₆O)pM₆ (p=an integer of 1 to 20, M₆ =Li⁺, H or a direct bond),
M₁ and M₂ are each independently selected from Li ⁺ and H,
A and B are each independently an aliphatic functional group,
n₁ and n₂ are each independently an integer of 50 to 1500,
m₁ and m₂ are each independently an integer of 50 to 1500.

In an embodiment of the present disclosure, each of the first polyacrylic acid derived block and the second polyacrylic acid derived block may include a repeating unit of - (C₂H₃C(O)OQ)- (where Q=M₁ or M₂) as shown in the above Chemical Formula 1.

In an embodiment of the present disclosure, at least one carboxyl group (-COOQ) in the first polyacrylic acid derived block and the second polyacrylic acid derived block may include a lithium-substituted one (-COO⁻Li⁺).

In another embodiment of the present disclosure, the carboxyl group in the first polyacrylic acid derived block and the second polyacrylic acid derived block may have a structure of -COO⁻Li⁺ when it is fully replaced by lithium.

As the carboxyl group in the first polyacrylic acid derived block and the second polyacrylic acid derived block has the lithium-substituted structure, when it is included in an electrode, there may be an effect of suppressing dissolution of lithium polysulfides from the electrode through hydrogen bonding, but the mechanism of the present disclosure is not limited thereto.

In an embodiment of the present disclosure, the first polyacrylic acid derived block and the second polyacrylic acid derived block may include each independently 50 to 1500 acrylic acid repeating structures. For example, in the above Chemical Formula 1, n₁ and n₂ may be each independently an integer of 50 to 1500, 100 to 1300, 100 to 1500, 200 to 1300, 300 to 1300, 500 to 1300, 1000 to 1200, or 1050 to 1150, or 1100, but the present disclosure is not limited thereto.

In an embodiment of the present disclosure, the binder includes the first polyalkyl methacrylate derived block between the thiocarbonyl thio functional group and the first polyacrylic acid derived block, and the second polyalkyl methacrylate derived block between the thiocarbonyl thio functional group and the second polyacrylic acid derived block. As each of the first polyalkyl methacrylate derived block and the second polyalkyl methacrylate derived block is included between the thiocarbonyl thio functional group and the polyacrylic acid derived block, they may play a role in improving elasticity and/or ionic conductivity of the binder, but the mechanism of the present disclosure is not limited thereto.

In an embodiment of the present disclosure, the first polyalkyl methacrylate derived block and the second polyalkyl methacrylate derived block may include each independently 50 to 1500 alkyl methacrylate repeating structures, and for example, 100 to 1500 alkyl methacrylate repeating structures. For example, in the above Chemical Formula 1, m₁ and m₂ may be each independently an integer of 50 to 1500, 100 to 1500, 200 to 1300, 300 to 1300, 500 to 1300, 800 to 1200, 1000 to 1200, 1000 to 1100, 1050 to 1150, or 1100, but the present disclosure is not limited thereto.

In an embodiment of the present disclosure, the first polyalkyl methacrylate derived block and the second polyalkyl methacrylate derived block may each include a repeating unit of -(C₂H₃C(O)OW)- (where W=R₁ or R₂) as shown in the above Chemical Formula 1.

In an embodiment of the present disclosure, the first polyalkyl methacrylate derived block and the second polyalkyl methacrylate derived block may include each independently at least one structure selected from Li⁺, H, C₁-C₅₀ alkyl_{,} -(C₂H₄O)oM₅ (o=integer of 1 to 20, M₅ =Li⁺, H or a direct bond) and -(C₃H₆O)pM₆ (p=integer of 1 to 20, M₆=Li⁺, H or a direct bond) as the structures of R₁ and R₂, according to the type of monomer used to produce them.

In another embodiment of the present disclosure, in the first polyalkyl methacrylate derived block and the second polyalkyl methacrylate derived block, R₁ and R₂ may each independently include a structure of -(C₂H₄O)oM₅ (o=an integer of 1 to 20, M₅ =Li⁺, H, or a direct bond) and -(C₃H₆O)pM₆ (p=an integer of 1 to 20, M₆ =Li⁺, H, or a direct bond). The structure of -(C₂H₄O)o- is a repeating unit of polyethylene glycol (PEG), and the structure of -(C₃H₆O)p- is a repeating unit of polypropylene glycol (PPG). The first polyalkyl methacrylate derived block and the second polyalkyl methacrylate derived block may each independently include PEG, PPG or polyethylene glycol-polypropylene glycol (PEGPPG) within the structure. As all the PEG, PPG and PEGPPG structures have the -OH structure at the end, there is an advantage of increasing the concentration of terminal -OH in the binder, thereby dramatically improving ionic conductivity and elasticity of the binder, but the mechanism of the present disclosure is not limited thereto.

In an embodiment of the present disclosure, at least one of the first polyalkyl methacrylate derived block or the second polyalkyl methacrylate derived block may include at least one of a polyethylene glycol repeating unit, a polypropylene glycol repeating unit or a polyethylene glycol-polypropylene glycol repeating unit.

In an embodiment of the present disclosure, when at least one of the first polyalkyl methacrylate derived block or the second polyalkyl methacrylate derived block includes at least one of the polyethylene glycol repeating unit, the polypropylene glycol repeating unit or the polyethylene glycol-polypropylene glycol repeating unit, the number of repeating units may be, for example, 1 to 30, and specifically 1 to 25, or 1 to 20, but the present disclosure is not limited thereto.

In an embodiment of the present disclosure, each of the first polyalkyl methacrylate derived block and the second polyalkyl methacrylate derived block may include the polyethylene glycol repeating unit as R₁ and R₂ in the above Chemical Formula 1. In this instance, the number of polyethylene glycol repeating units may be 1 to 30, and specifically 1 to 25, or 1 to 20, for example, 5 to 15, 5 to 10, 6 to 9, or 9, but the present disclosure is not limited thereto.

In an embodiment of the present disclosure, in the first polyalkyl methacrylate derived block and the second polyalkyl methacrylate derived block, at least a part of the terminal hydroxyl group (-OH) of the polyethylene glycol group, the polypropylene glycol group or the polyethylene glycol-polypropylene glycol group may be replaced by lithium, resulting in a structure of -O⁻Li⁺.

In another embodiment of the present disclosure, in the first polyalkyl methacrylate derived block and the second polyalkyl methacrylate derived block, the terminal hydroxyl group (-OH) of the polyethylene glycol group, the polypropylene glycol group or the polyethylene glycol-polypropylene glycol group may be fully replaced by lithium, resulting in a structure of -O⁻Li⁺.

In an embodiment of the present disclosure, the binder may include the aliphatic functional group as the organic functional group at the outermost terminal end. Specifically, in the above Chemical Formula 1, the structure A and the structure B may include the aliphatic functional group. More specifically, in the above Chemical Formula 1, the structure A and the structure B may be composed of the aliphatic functional group.

In an embodiment of the present disclosure, the structure A and the structure B may be a structure derived from polyacrylic acid, and may be, for example, represented by the following Chemical Formulas 2 and 3, respectively.

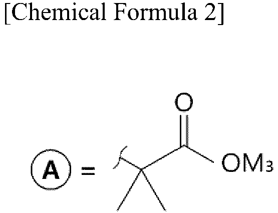

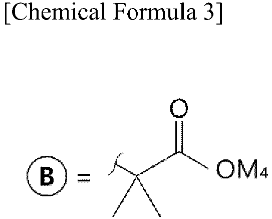

In the above Chemical Formulas 2 and 3,
M₃ and M₄ are each independently selected from Li⁺ and H.

In an embodiment of the present disclosure, when the structure A and the structure B in the binder have the structure of Chemical Formula 2 and the structure of Chemical Formula 3, respectively, M₃ and M₄ may be Li⁺ by lithiation.

According to an embodiment of the present disclosure, the binder may achieve improved adsorption of lithium polysulfides through the lithium-substituted carboxyl group (-COO⁻Li⁺) at the end, thereby suppressing the shuttle effect of lithium polysulfides that dissolve from the electrode into the electrolyte, but the mechanism of the present disclosure is not limited thereto.

In an embodiment of the present disclosure, the binder may preferably exhibit a pH of 8 or lower when dispersed in water due to the carboxyl functional group included in the structure. More preferably, as at least a part of the carboxyl group in the binder exists in a lithium-substituted form (-COO⁻Li⁺), the binder may, for example, exhibit the pH of 6 or more and pH 8 or less, and more preferably, more than 6.0 and 8.0 or less when dispersed in water.

In an embodiment of the present disclosure, the pH of the dispersion of the binder in water may be, for example, in a range of 6.2 to 7.8, and specifically 6.3 to 7.7, 6.4 to 7.6, or 6.5 to 7.4.

In this specification, the pH of the dispersion of the binder in water may be measured by any known method for measuring the pH of the dispersion of the binder in water, and the measurement method is not limited to a particular one. For example, the pH may be measured in 5 wt% binder dispersion at room temperature (23°C). In addition, the pH of the water-based dispersion may be measured using a known pH meter, for example, ThermoFisher's Scientific Orion Star A121, but the measurement method is not limited thereto.

When considering that the pH of dispersions of PAA binders in water is 6.0 or less, for example, in a range of 4.5 to 6.0, the binder according to an embodiment of the present disclosure may be more advantageous in terms of stability in manufacturing of electrodes of lithium secondary batteries, but the present disclosure is not limited thereto.

In an embodiment of the present disclosure, the binder may include the first polyalkyl methacrylate derived block and the second polyalkyl methacrylate derived block in symmetry or asymmetry with respect to the thiocarbonyl thio functional group. In terms of ease of synthesis of the binder, the binder may have a symmetrical structure of the first polyalkyl methacrylate derived block and the second polyalkyl methacrylate derived block with respect to the thiocarbonyl thio functional group, but the present disclosure is not limited thereto.

In an embodiment of the present disclosure, the binder may include the first polyacrylic acid derived block and the second polyacrylic acid derived block in symmetry or asymmetry with respect to the thiocarbonyl thio functional group. In terms of ease of synthesis of the binder, the binder may have a symmetrical structure of the first polyacrylic acid derived block and the second polyacrylic acid derived block with respect to the thiocarbonyl thio functional group, but the present disclosure is not limited thereto.

In an embodiment of the present disclosure, the binder may include the structure A and the structure B in symmetry or asymmetry with respect to the thiocarbonyl thio functional group. In terms of ease of synthesis of the binder, the binder may have a symmetrical structure of the structure A and the structure B with respect to the thiocarbonyl thio functional group, but the present disclosure is not limited thereto.

In an embodiment of the present disclosure, the binder may include a compound having a structure of the following Chemical Formula 4.

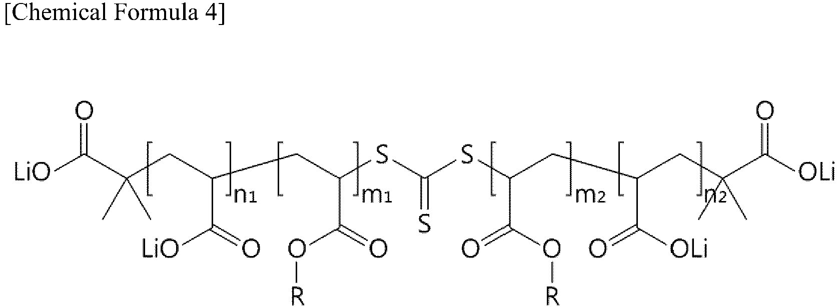

In the above Chemical Formula 4,
n₁ and n₂ are each independently an integer of 50 to 1500,
m₁ and m₂ are each independently an integer of 50 to 1500.

In an embodiment of the present disclosure, a viscosity of the binder is not limited to a particular range and may be in a suitable range for use in electrodes for lithium secondary batteries, but for example, the binder may preferably have a molecular weight for the viscosity of 3,000 cP or more at 23°C on the basis of a solution of 3 wt% binder in water. Here, the viscosity indicates a standard measured by an intrinsic viscosity measurement method using Bath, Kinematic viscosity (J-BV08).

In an embodiment of the present disclosure, the weight average molecular weight (Mw) of the binder may be, for example, 7,000 g/mol to 1,000,000 g/mol. Specifically, the weight average molecular weight of the binder may be 10,000 g/mol to 900,000 g/mol, 50,000 g/mol to 800,000 g/mol, 100,000 g/mol to 500,000 g/mol, 200,000 g/mol to 400,000 g/mol, 250,000 g/mol to 350,000 g/mol, or 250,000 g/mol to 300,000 g/mol, and specifically 300,000 g/mol, but the present disclosure is not limited thereto.

In an embodiment of the present disclosure, the weight average molecular weight of the binder may be measured by any known method for measuring the weight average molecular weight of polymer, and the measurement method is not limited to a particular one. For example, ¹H NMR, ¹³C NMR, Mass spectroscopy, FT-IR or HPLC analysis of the binder may be used to measure.

In an embodiment of the present disclosure, the weight average molecular weight of the binder may be measured by the following method, but the measurement method is not limited thereto.

In an embodiment of the present disclosure, the weight average molecular weight (Mw) for 1 g of binder solution is calculated using gel permeation chromatography (GPC, PL GPC220, Agilent Technologies) in the following conditions.
Column: PLmixed B X 2,
Solvent: DMF/0.05 M LiBr (0.45 µm Filtered),
Flow rate: 1.0 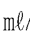 /min,
Sample concentration: 4.0 mg/ml,
Injection volume: 100 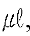 ,
Column temperature: 65°C
Detector: Waters RI Detector, Standard: PS

Hereinafter, a method for manufacturing the binder according to an embodiment of the present disclosure will be described. However, the binder having the above-described structure may be manufactured by any other organic synthesis method, and the method for manufacturing the binder is not limited thereto.

According to an embodiment of the present disclosure, the binder may be manufactured through Reversible Addition-Fragmentation chain transfer polymerization (RAFT polymerization) reaction.

In an embodiment of the present disclosure, the method for manufacturing the binder by RAFT polymerization may largely include the following two processes:
preparing a RAFT initiator, and
performing polymerization reaction between polymerization raw materials using the prepared RAFT initiator.

In an embodiment of the present disclosure, the RAFT initiator may be prepared by obtaining a commercially available RAFT reagent or directly making it, and the preparation method is not limited to a particular one.

In an embodiment of the present disclosure, an organic functional group included in the RAFT initiator may be included as the terminal functional group of the binder, and as described above, the organic functional group at the outermost terminal end of the binder includes the aliphatic functional group. Accordingly, preferably, the RAFT initiator may include the aliphatic functional group, and more specifically, the RAFT initiator composed of the aliphatic functional group may be prepared.

In an embodiment of the present disclosure, the RAFT initiator may include the aliphatic functional group and the thiocarbonyl thio functional group.

According to an embodiment of the present disclosure, the RAFT initiator may be prepared using a mixture of carbon disulfide (CS₂), trihalomethane and tetraalkylene ammonium bisulfate.

For example, the RAFT initiator may be obtained by adding the carbon disulfide (CS₂) and the trihalomethane to an organic solvent such as acetone, adding the tetraalkylene ammonium bisulfate as a phase transfer catalyst (PTC), and mixing together, followed by an addition of NaOH and final acid work-up using HCl .

According to an embodiment of the present disclosure, the trihalomethane may include trichloromethane.

According to an embodiment of the present disclosure, the tetraalkylene ammonium bisulfate may include tetrabutyl ammonium bisulfate.

According to an embodiment of the present disclosure, the RAFT initiator may include S,S'-bis(R,R'-dimethyl-R''-acetic acid)-trithiocarbonate (BDAAT).

In an embodiment of the present disclosure, the binder may be obtained by dissolving the as-prepared RAFT initiator and a set equivalent amount of polymerization raw material in the organic solvent, followed by thermal polymerization.

In an embodiment of the present disclosure, the second process may be performed using the RAFT initiator by one-step reaction to form the polyalkyl methacrylate derived block and the polyacrylic acid derived block at the same time.

In another embodiment of the present disclosure, the second process may be performed using the RAFT initiator by two-step reaction to form the polyalkyl methacrylate derived block and the polyacrylic acid derived block in a sequential order.

For example, in an embodiment of the present disclosure, the second process may include the steps of forming the polyacrylic acid derived block to the RAFT initiator and forming the polyalkyl methacrylate in a sequential order. To this end, first, the as-prepared RAFT initiator and a set equivalent amount of acrylic acid-based monomer may be dissolved in the organic solvent, followed by thermal polymerization to obtain a precursor including the polyacrylic acid derived block bonded to the RAFT initiator. Subsequently, the precursor and a set equivalent amount of alkyl methacrylate-based monomer may be dissolved in the organic solvent, followed by thermal polymerization to obtain the binder.

In an embodiment of the present disclosure, the method for manufacturing the binder may further include the step of performing lithiation of the resulting binder. For example, the binder may include a plurality of carboxyl groups at the end, and in this instance, for the ithiation of the carboxyl groups, the lithiated binder may be obtained when the binder contacts a LiOH aqueous solution.

For example, the binder represented by the following Chemical Formula 4 may be manufactured by the following method, but the method for manufacturing the binder is not limited thereto.

First, the as-prepared BDAAT is prepared as the RAFT initiator.

0.25 mmol of the as-prepared BDAAT is dissolved in 20 ml of 1,4-dioxane together with 400 equivalents of acrylic acid (AA) and 4,4'-azobis(4-cyanovaleic acid) (V-501), and after reaction at 75°C for 18 hours, an intermediate product (PAA₄₀₀) is obtained. 0.8 g of the obtained intermediate product (PAA₄₀₀) is dissolved in 30 ml of distilled water together with 400 equivalents of poly(ethylene glycol) methyl ether acrylate (PM) (Mn=480) and V-501, and after reaction at 75°C for 18 hours, an intermediate product P(AA₄₀₀-b-PM₄₀₀) is obtained. After overnight reaction with 4 equivalents of 10 wt% LiOH aqueous solution relative to the number of carboxyl groups (-COOH) in the obtained P(AA₄₀₀-b-PM₄₀₀) at room temperature, P(AA₄₀₀-b-PM₄₀₀)-Li is obtained.

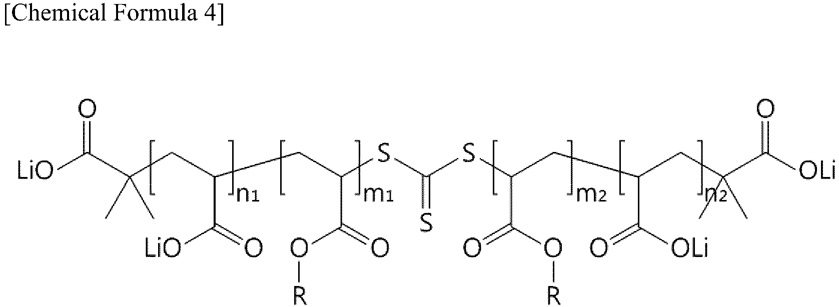

According to another aspect of the present disclosure, provided may be a method for manufacturing an electrode for a lithium secondary battery using the above-described binder.

The method for manufacturing the electrode for the lithium secondary battery may include the step of applying a slurry containing a mixture of the binder and an active material in an appropriate solvent to at least one surface of a current collector and drying the slurry. Optionally, the slurry may further include a conductive material.

According to an aspect of the present disclosure, the binder may be effective, especially in suppressing the dissolution of lithium polysulfides within the positive electrode of the lithium-sulfur battery. Accordingly, the binder may be used to manufacture the positive electrode of the lithium-sulfur battery, and the method for manufacturing the electrode of the lithium secondary battery may be a method for manufacturing the positive electrode of the lithium-sulfur battery.

The method for manufacturing the lithium secondary battery according to an aspect of the present disclosure may include applying the slurry containing a mixture of the binder, a sulfur-based compound and a conductive carbon material in an aqueous solvent to at least one surface of the current collector and drying the slurry to obtain the electrode.

For details of the binder, reference is made to the above description of the binder.

In an embodiment of the present disclosure, the binder may dissolve well in the aqueous solvent, to be specific, water by lithiation of the terminal functional groups. Accordingly, the method for manufacturing the electrode using the binder may have an advantage of using the aqueous solvent, and specifically water. In this case, the water may include distilled water or deionized water. However, the present disclosure is not necessarily limited thereto, and if necessary, may use lower alcohol that can easily blend with water. The lower alcohol may include, for example, methanol, ethanol, propanol, isopropanol and butanol, and preferably, they may be mixed with water. The amount of the solvent in the slurry may be at an optimal level for the concentration for easy coating, and may change depending on the coating method and device.

The method for applying the slurry is not limited to a particular one in the present disclosure, and may include, for example, doctor blading, die casting, comma coating or screen printing. In addition, the slurry may be applied to the current collector by shaping on a substrate, and pressing or lamination.

After the coating, the drying process may be performed to remove the solvent. The drying process may be performed with a sufficient temperature and time to remove the solvent. The conditions may change depending on the type of solvent, and are not particularly limited to the present disclosure. For example, the drying method may include warm air, hot air or low humidity air drying, vacuum drying or drying using radiation such as (far) infrared rays or electron beams. The drying speed is usually adjusted to remove the solvent as quickly as possible within a speed range to prevent cracks in an active material layer or separation of the active material layer from the current collector due to stress buildup.

Additionally, in an embodiment of the present disclosure, after the drying, the method may further include the step of pressing the electrode to increase the density of the active material within the electrode. The pressing method may include, for example, mold pressing or roll pressing.

In an embodiment of the present disclosure, a porosity of the electrode manufactured by the above-described composition and manufacturing method, specifically, the positive electrode active material layer including the sulfur-based compound may be 50 to 80 vol% by volume, and specifically, 60 to 75 vol%. When the porosity of the positive electrode is less than 50 vol%, the filling degree of the positive electrode slurry composition including the positive electrode active material, the conductive material and the binder is excessively high, thereby failing to maintain a sufficient amount of electrolyte to ensure ionic conductivity and/or electrical conductivity between the positive electrode active materials, which degrades output characteristics or cycling characteristics of the battery and aggravates overvoltage and discharge capacity decline of the battery. In contrast, when the positive electrode has too high porosity of more than 80 vol%, it leads to a reduction in physical and electrical connection with the current collector, its consequential low adhesion strength and poor reaction, and the increased porosity filled with the electrolyte may lead to lower energy density of the battery. Thus, the porosity is properly adjusted within the aforementioned range.

In an embodiment of the present disclosure, the sulfur-based compound is not limited to a particular one and may include any material including a disulfide (SS) structure, which may be used as the positive electrode active material of the lithium-sulfur battery. The sulfur-based compound may include, for example, any sulfur-containing compound that may be formed through reduction reaction of inorganic sulfur (S₈) or oxidation reaction of lithium sulfide (Li₂S). Specifically, the sulfur-based compound may include an inorganic sulfur (S₈), lithium sulfide (Li₂S), lithium polysulfide (Li₂Sx, 1 < x ≤ 8), a disulfide compound, a carbon-sulfur polymer ((C₂S_{y})ₙ, y = 2.5 to 50, n ≥ 2), or two or more thereof.

In an embodiment of the present disclosure, the sulfur-based compound may preferably include the inorganic sulfur (S₈).

In an embodiment of the present disclosure, the sulfur-based compound may be used in the form of a sulfur-carbon composite supported on a conductive porous carbon material. Specifically, the sulfur-carbon composite may include a porous carbon material and a sulfur-based compound supported on at least one of an inside of pores of the porous carbon material or an outer surface of the porous carbon material. Because sulfur that acts as the positive electrode active material does not have electrical conductivity, sulfur may preferably combine with the conductive material such as carbon materials to form the composite. Accordingly, to support the sulfur-based compound, the conductive carbon material preferably includes porous materials.

In an embodiment of the present disclosure, the porous carbon material may support the sulfur-based compound as the positive electrode active material, provide a framework for uniformly and stably holding the sulfur-based compound and improve the conductivity of the positive electrode, and is not limited to a particular type and may include any type of porous carbon material.

The porous carbon material may generally be manufactured by carbonization of a variety of carbon precursors. The porous carbon material may include irregular pores inside. The average pore diameter may range from 1 to 200 nm. The porosity may range from 10 to 90 vol% of the total volume of the porous carbon material. When the average pore diameter is less than the aforementioned range, the pore size is at the molecular level, making sulfur impregnation impossible. In contrast, when the average pore diameter is more than the aforementioned range, the mechanical strength of the porous carbon material is reduced, and it is not desirable to use in the electrode manufacturing process.

In an embodiment of the present disclosure, the 'average pore diameter' may be measured by any known method for measuring the pore diameter of a porous material, and the measurement method is not limited to a particular one. For example, the pore diameter may be measured according to scanning electron microscopy (SEM), field emission scanning electron microscopy, a laser diffraction method or a Brunauer-Emmett-Teller (BET) method. The measurement using the laser diffraction method may, for example, use a commercially available laser diffraction particle size measuring instrument (for example, Microtrac MT 3000). In addition, the measurement according to the BET method may, for example, use BEL Japan's BELSORP series analyzer, but is not limited thereto.

In an embodiment of the present disclosure, the 'porosity' refers to a ratio of volume occupied by pores in a structure to its total volume, and its unit is %. The porosity may be used interchangeably with void fraction, void ratio or the like. In the present disclosure, the measurement of the porosity is not limited to a particular method, and according to an embodiment of the present disclosure, for example, the porosity may be measured according to the BET method using nitrogen gas, Hg porosimeter or ASTM D2873.

The porous carbon material may be spherical, rod-like, needle-like, platy, tubular or bulky in shape, and the shape is not limited to a particular one and may include any shape commonly used in the lithium-sulfur battery.

The porous carbon material may include any type of commonly used carbon material having a porous structure or high specific surface area. For example, the porous carbon material may include at least one selected from the group consisting of graphite; graphene; carbon black such as Denka black, acetylene black, Ketjen black, channel black, furnace black, lamp black or thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); and graphite such as natural graphite, artificial graphite or expandable graphite and activated carbon, but is not limited thereto. Preferably, the porous carbon material may include carbon nanotubes.

In an embodiment of the present disclosure, the porous carbon material may include carbon black, and the sulfur-carbon composite may include a composite of the sulfur-based compound and the carbon black.

In an embodiment of the present disclosure, a method for producing the sulfur-carbon composite is not limited to a particular one in the present disclosure, and may include any method commonly used in the art. For example, the sulfur-carbon composite may be produced by mixing the sulfur-based compound with the porous carbon material, performing thermal treatment and incorporating the molten sulfur-based compound into the porous carbon material, but the present disclosure is not limited thereto.

In an embodiment of the present disclosure, a weight ratio of the sulfur-based compound to the porous carbon material in the sulfur-carbon composite may be, for example, 5:5 to 9:1, 6:4 to 9:2, or 6:4 to 7:3, but the present disclosure is not limited thereto. When the weight ratio falls within the aforementioned range, it may be desirable in terms of the electron transfer area of the sulfur-carbon composite and electrolyte wetting of the positive electrode, and for example, the increased usable surface in the sulfur-carbon composite may be desirable in suppressing the dissolution of sulfur from the positive electrode, but the present disclosure is not limited thereto.

In an embodiment of the present disclosure, the method for manufacturing the electrode for the lithium secondary battery may further include thermally treating the mixture of the sulfur-based compound and the conductive carbon material to obtain the sulfur-carbon composite, and accordingly, the slurry for the formation of the electrode may be obtained by mixing the sulfur-carbon composite and the binder within the aqueous solvent.

In an embodiment of the present disclosure, the current collector supports the positive electrode active material, and is not limited to a particular type and may include any material having high conductivity without causing a chemical change in the battery. For example, the current collector may include copper, stainless steel, aluminum, nickel, titanium, palladium, calcined carbon, copper or stainless steel treated with carbon, nickel or silver on the surface, or an aluminum-cadmium alloy. The positive current collector may have a microtextured surface to increase the bond strength with the positive electrode active material, and may come in many different forms, for example, a film, sheet, a foil, a mesh, a net, a porous body, a foam or a non-woven fabric.

In an embodiment of the present disclosure, in addition to the sulfur-based compound, the electrode may further include, as the active material, transition metal elements, Group IIIA elements, Group IVA elements, or a mixture of two or more thereof, without departing from the purpose of the present disclosure. The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, and the Group IIIA elements may include Al, Ga, In or Ti, and the Group IVA elements may include Ge, Sn or Pb.

In an embodiment of the present disclosure, the sulfur-carbon composite may be included in an amount of 50 wt% or more based on the total weight of the electrode. Specifically, the sulfur-carbon composite may be, for example, included in an amount of 70 wt% or more, or 80 wt% or more based on the total weight of the electrode active material layer. Specifically, the sulfur-carbon composite may be included in an amount of 80 wt% to 100 wt%, or 80 wt% to 90 wt% based on the total weight of the electrode active material layer. When the amount of the sulfur-carbon composite is less than the aforementioned range, the relative amount of auxiliary material such as the conductive material or the binder increases and the amount of the sulfur-carbon composite decreases, making it difficult to realize the battery with high capacity and high energy density. In contrast, when the amount of the sulfur-carbon composite is more than the aforementioned range, the amount of the conductive material or the binder as described below is relatively insufficient, resulting in degraded physical properties of the electrode.

In an embodiment of the present disclosure, in addition to the conductive carbon material for the preparation of the sulfur-carbon composite, the electrode active material layer may further include the conductive material. The conductive material acts as movement pathways of electrons from the current collector to the electrode active material by electrically connecting the electrolyte to the electrode active material, and is physically different from the carbon contained in the sulfur-carbon composite. The conductive material is not limited to a particular type and may include any type of material having conductivity.

In an embodiment of the present disclosure, the conductive material may include, for example, carbon black such as Super-P, Denka black, acetylene black, Ketjen black, channel black, furnace black, lamp black, thermal black or carbon black; carbon derivatives such as carbon nanotubes or fullerene; conductive fibers such as carbon fibers or metal fibers; fluorocarbon; metal powders such as aluminum or nickel powders; or conductive polymers such as polyaniline, polythiophene, polyacetylene or polypyrrole, used singly or in combination.

In an embodiment of the present disclosure, the amount of the conductive material may be 1 to 15 wt%, or 5 to 10 wt% based on the total weight of the positive electrode active material layer.

In an embodiment of the present disclosure, in addition to the above-described binder, the binder may further include any commonly used binder that may be used in the electrode active material layer without departing from the purpose of the present disclosure. For example, the binder may further include any one selected from the group consisting of a fluororesin-based binder including polyvinylidene fluoride (PVdF), a polyvinylidene fluoride-based polymer containing at least one vinylidene fluoride repeating unit, polytetrafluoroethylene (PTFE), or a mixture of two or more thereof; a rubber-based binder including styrene butadiene rubber (SBR), acrylonitrile-butidiene rubber or styrene-isoprene rubber; an acrylic binder; a cellulose-based binder including carboxyl methyl cellulose (CMC), starch, hydroxypropyl cellulose or regenerated cellulose; a polyalcohol-based binder; a polyolefin-based binder including polyethylene or polypropylene; a polyimide-based binder; a polyester-based binder; and a silane-based binder, or a mixture or copolymer of two or more thereof.

In an embodiment of the present disclosure, the amount of the binder may be 1 to 15 wt%, or 5 to 10 wt% based on the total weight of the positive electrode active material layer. When the amount of the binder falls within the aforementioned range, the bond strength between the current collector and the electrode active material layer may be improved, and it may have a beneficial effect on suppressing the dissolution of lithium polysulfides from the electrode, but the present disclosure is not limited thereto.

In an embodiment of the present disclosure, the electrode manufactured as described above includes the current collector and the electrode active material layer present on at least one surface of the current collector.

In this instance, according to an embodiment of the present disclosure, the thickness of the electrode active material layer may be 100 µm or more, and specifically 200 µm or more, for example 250 µm or more. When the thickness of the electrode active material layer falls within the aforementioned range, it may be desirable in terms of the capacity relative to the weight of the electrode, but the present disclosure is not limited thereto.

In the present specification, the thickness of the electrode active material layer may be measured in the process of applying the slurry during the preparation of the electrode active material layer, or may be measured in the final dry electrode. A known thickness measuring instrument may be used to measure the thickness of the electrode active material layer in the final dry electrode. The thickness measuring instrument may be, for example, Mitutoyo's thickness gauge. Alternatively, the thickness of the electrode may be measured through a cross-sectional electron microscopic image of the electrode, and the thickness of the electrode active material layer may be calculated by subtracting the thickness of the current collector from the thickness of the electrode.

According to another aspect of the present disclosure, provided is a lithium secondary battery including the above-described electrode.

In an embodiment of the present disclosure, the lithium secondary battery may include the electrode as a positive electrode and a negative electrode as a counter electrode.

In an embodiment of the present disclosure, the negative electrode may include a negative current collector and a negative electrode active material layer coated on one or two surfaces of the negative current collector. Alternatively, the negative electrode may be a lithium metal plate.

The negative current collector supports the negative electrode active material layer, and for details of the negative current collector, reference is made to the above description of the current collector.

In an embodiment of the present disclosure, the negative electrode active material layer may include a negative electrode active material, and further include a conductive material or a binder. The negative electrode active material may include a material capable of reversible intercalation or deintercalation of lithium ions (Li⁺), a material that reacts with lithium ions to reversibly form a lithium-containing compound, a lithium metal or a lithium alloy. The material capable of reversible intercalation or deintercalation of lithium ions (Li⁺) may include, for example, crystalline carbon, amorphous carbon, or a mixture thereof. The material that reacts with lithium ions (Li⁺) to reversibly form the lithium-containing compound may include, for example, tin oxide, titanium nitrate or silicon. The lithium alloy may include, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). For details of the conductive material, reference may be made to the above description, and the binder is not limited to a particular one and may include the binder according to an aspect of the present disclosure, the existing binder, or a mixture thereof.

In an embodiment of the present disclosure, the lithium secondary battery may be a lithium-sulfur battery, and in this instance, the negative electrode active material may be lithium metal, and specifically, may be in the form of a lithium metal foil or lithium metal powder. According to an embodiment of the present disclosure, the negative electrode may only include the lithium metal or lithium alloy foil without the current collector.

In addition to the positive electrode and the negative electrode, the lithium secondary battery may include an electrolyte and may further include a separator, if necessary.

In an embodiment of the present disclosure, the electrolyte may include a lithium salt.

The lithium salt is not limited to a particular type and may include any lithium salt that may be used in the lithium secondary battery, specifically, the lithium-sulfur battery. For example, the lithium salt may include LiCl, LiBr, LiI, LiClO₄, LiBF_{4,} LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylic acid, lithium tetraphenylborate, lithium imide, or two or more thereof.

In an embodiment of the present disclosure, in addition to the lithium salt, the electrolyte may further include a non-aqueous solvent. Alternatively, the electrolyte may be included in the form of a solid electrolyte layer present on at least one surface of the electrode without a solvent.

In an embodiment of the present disclosure, the lithium secondary battery may include the separator if necessary, and the separator may separate or insulate the positive electrode from the negative electrode and allow for lithium ion transport between the positive electrode and the negative electrode. The separator may be made of a porous nonconductive or insulating material, and may include any separator material commonly used in the lithium secondary battery. The separator may be a stand-alone element such as a film, or a coating layer added to the positive electrode and/or the negative electrode.

In an embodiment of the present disclosure, the lithium secondary battery may have many different shapes, and for example, may have a coin shape, a prismatic shape, a pouch shape or a cylindrical shape, but is not limited thereto.

Hereinafter, examples are presented below to help the understand the present disclosure, but they are provided for illustrative purposes, and it is obvious to those skilled in the art that a variety of changes and modifications may be made within the scope and technical aspects of the present disclosure, and it should be understood that such changes and modifications fall within the scope of the appended claims.

### Preparation of binder

### Preparation Example 1

### - Synthesis of S,S-bis(R,R'-dimethyl-R'-acetic acid)-trithiocarbonate (BDAAT)

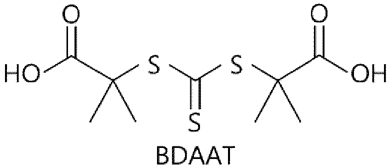

As a RAFT initiator, BDAAT was synthesized by the following method.

CS₂, chloroform, acetone and tetrabutyl ammonium hydrogensulfate as a phase transfer catalyst (PTC) were mixed together, followed by an addition of NaOH and final acid work-up using hydrochloric acid to prepare the above-identified BDAAT.

### Example 1

### - Synthesis of P(AA₄₀₀-b-PM₄₀₀) binder

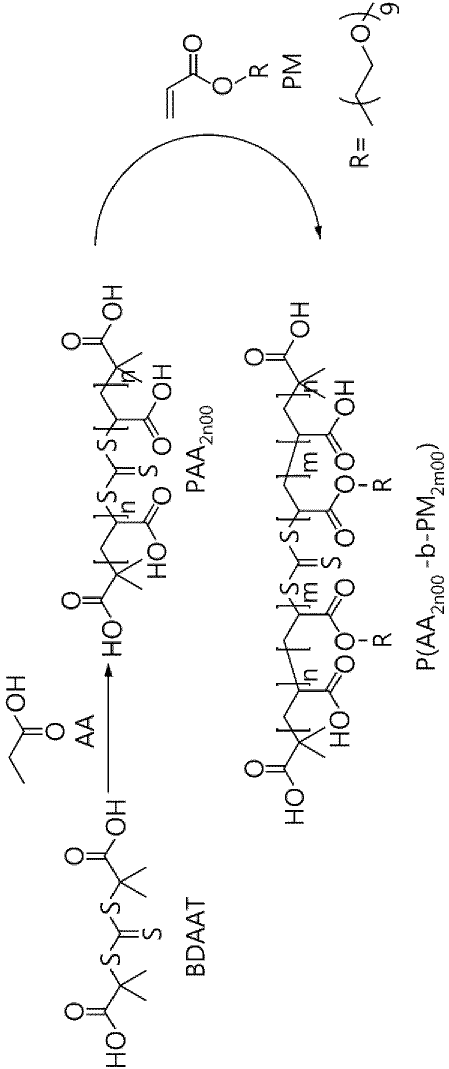

400 equivalents of acrylic acid (AA) relative to 0.25 mmol of BDAAT of Preparation Example 1 was dissolved in 20 ml of 1,4-dioxane together with 1 wt% of V-501(4,4'-azobis(4-cyanovaleric acid)) based on the total 100 wt% of the BDAAT and the acrylic acid, and after reaction at 75°C for 18 h, PAA₄₀₀ as an intermediate product was obtained.

400 equivalents of poly(ethylene glycol) methyl ether acrylate (PM) (Mₙ=480) relative to 0.8 g of PAA₄₀₀ was dissolved in 30 ml of distilled water together with V-501, and after reaction at 75°C for 18 h, P(AA₄₀₀-b-PM₄₀₀) as the binder of Example 1 was obtained.

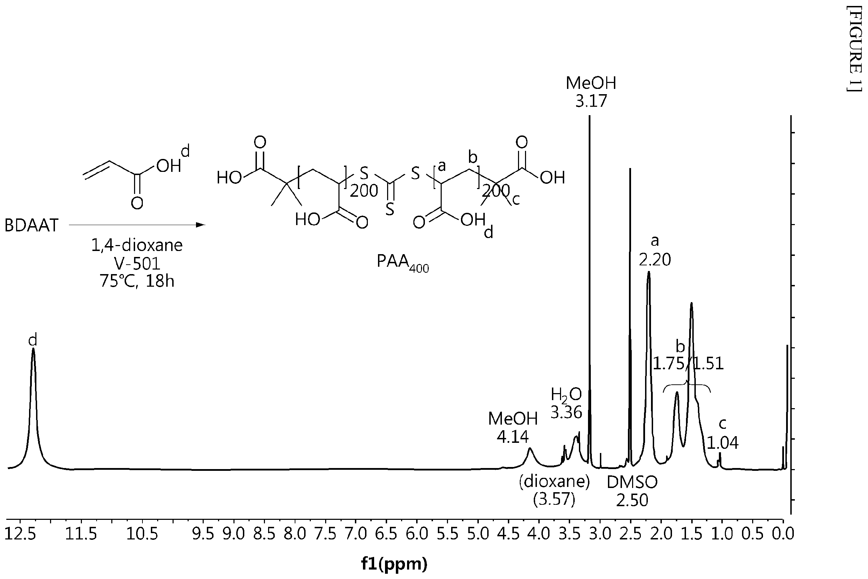

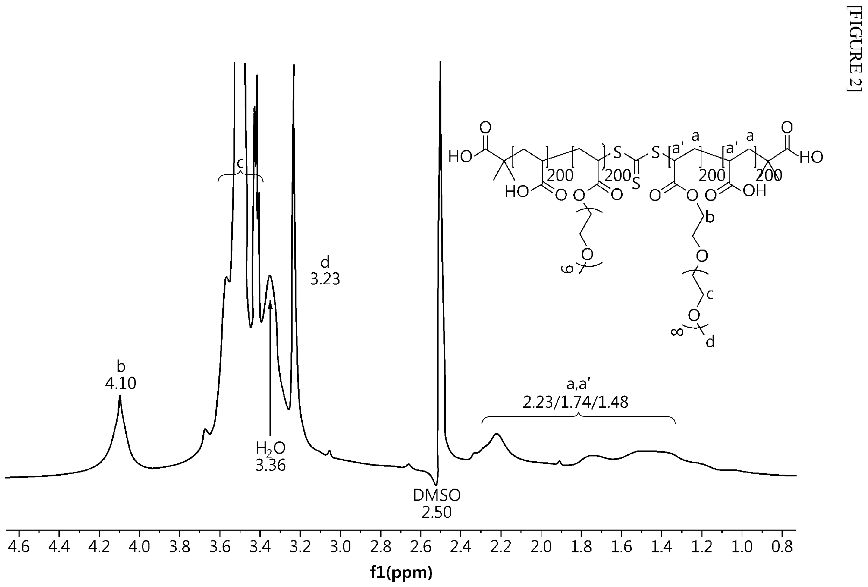

FIG. 1 shows 1H NMR spectrum as a result of synthesis of PAA₄₀₀, and FIG. 2 shows 1H NMR spectrum as the synthesis result of P(AA₄₀₀-b-PM₄₀₀).

### Example 2

### - Synthesis of P(AA₄₀₀-b-PM₄₀₀)-Li binder

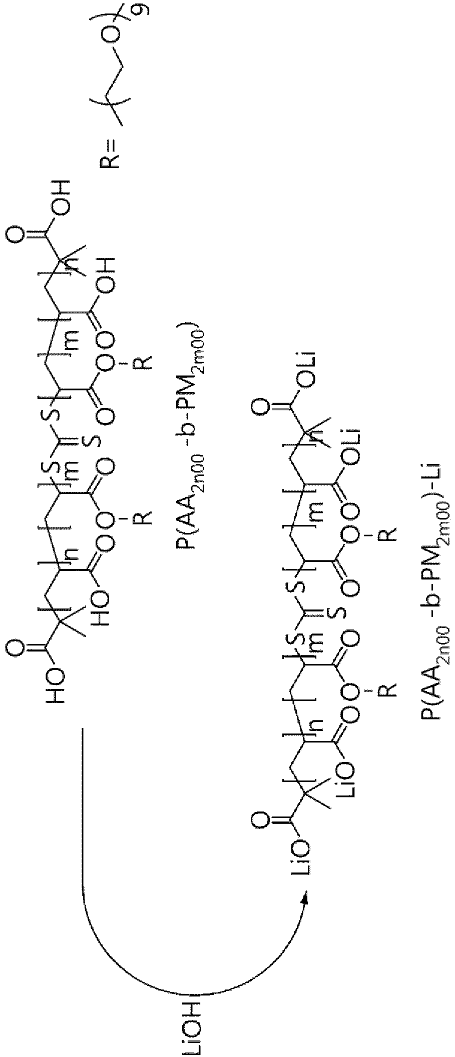

After overnight reaction at room temperature with 4 equivalents of 10 wt% LiOH aqueous solution relative to the number of -COOH functional groups in P(AA₄₀₀-b-PM₄₀₀) obtained in Example 1, P(AA₄₀₀-b-PM₄₀₀)-Li as a binder of Example 2 was obtained.

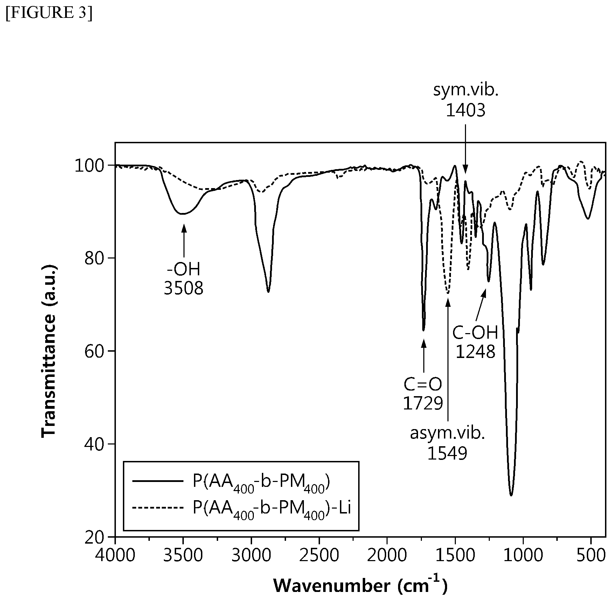

FIG. 3 shows TFT-IR spectrum as the synthesis result of P(AA₄₀₀-b-PM₄₀₀)-Li.

### Example 3

### - Synthesis of P(AA₂₀₀-b-PM₆₀₀) binder

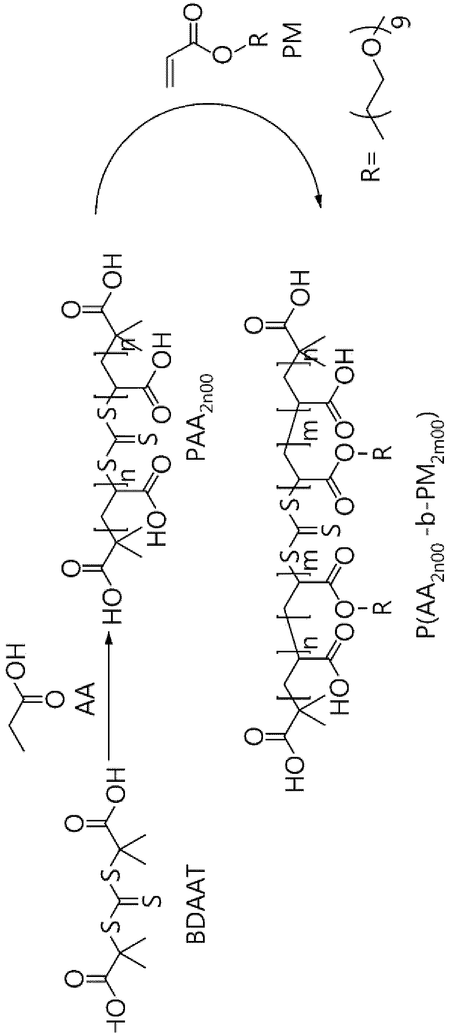

PAA₂₀₀ was synthesized as an intermediate product according to the same method as Example 1, except that 200 equivalents of acrylic acid (AA) relative to 0.25 mmol of BDAAT of Preparation Example 1 was used.

P(AA₂₀₀-b-PM₆₀₀) was obtained as a binder of Example 3 according to the same method as Example 1, except that 600 equivalents of poly(ethylene glycol) methyl ether acrylate (PM) relative to 0.8 g of PAA₂₀₀ was used.

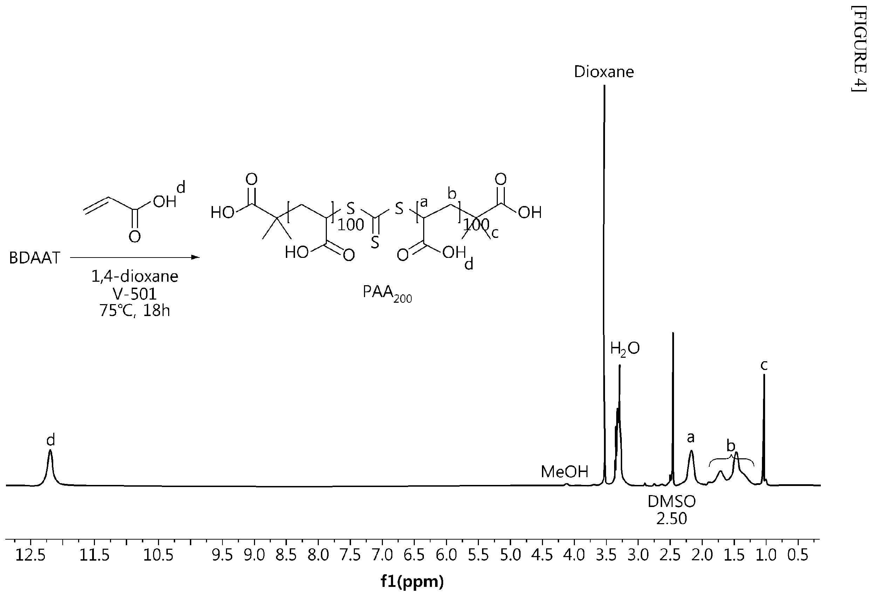

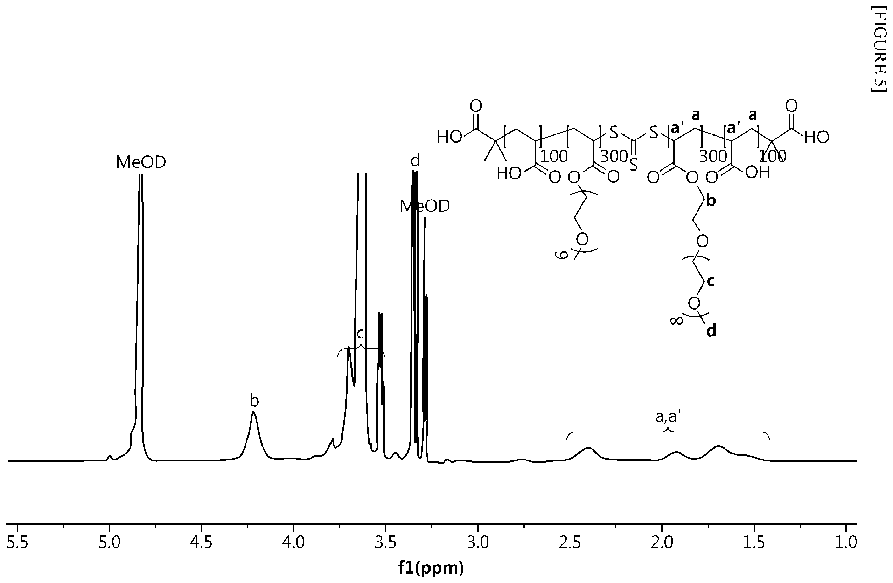

FIG. 4 shows 1H NMR spectrum as the synthesis result of PAA ₂₀₀, and FIG. 5 shows 1H NMR spectrum as the synthesis result of P(AA₂₀₀-b-PM₆₀₀).

### Example 4

### - Synthesis of P(AA₂₀₀-b-PM₆₀₀)-Li binder

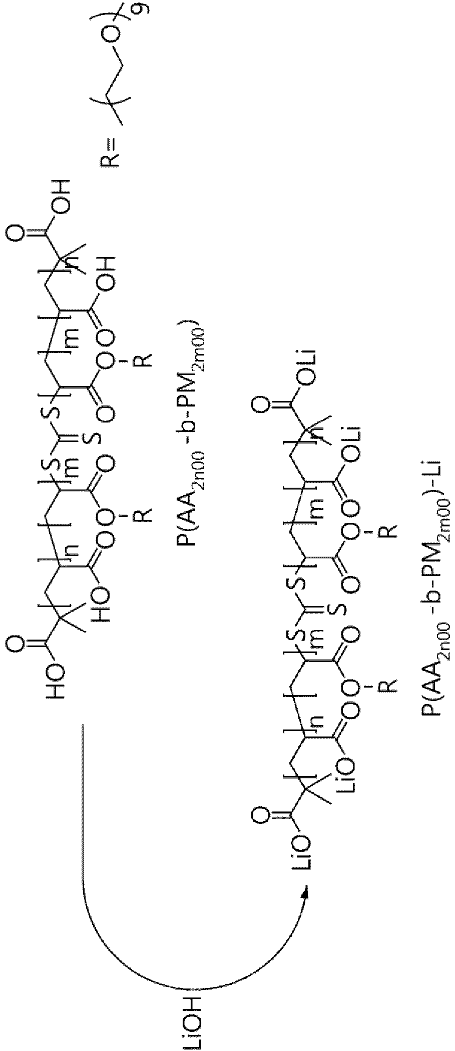

After overnight reaction at room temperature with 4 equivalents of 10 wt% LiOH aqueous solution relative to the number of -COOH functional groups in P(AA₂₀₀-b-PM₆₀₀) obtained in Example 3, P(AA₂₀₀-b-PM₆₀₀)-Li as a binder of Example 4 was obtained.

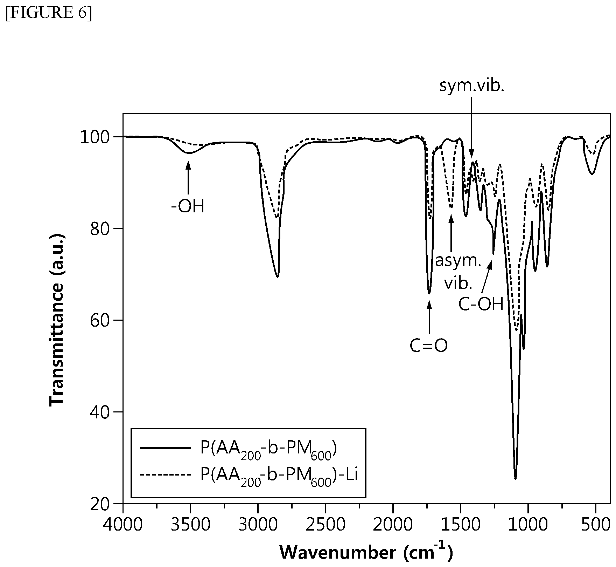

FIG. 6 shows TFT-IR spectrum as the synthesis result of P(AA₂₀₀-b-PM₆₀₀)-Li.

### Comparative Example 1

### - Synthesis of P(AA₄₀₀ -b-PM₄₀₀) (b-type) binder

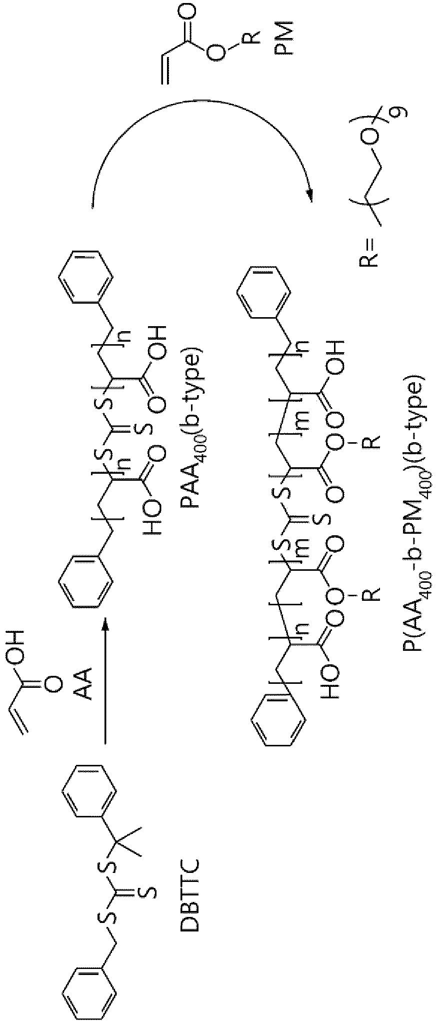

RAFT polymerization reaction was initiated using dibenzyl trithiocarbonate (DBTTC) including an aromatic functional group at the outermost terminal end as a RAFT initiator.

400 equivalents of acrylic acid (AA) relative to 0.25 mmol DBTTC (dibenzyl trithiocarbonate) was dissolved in 20 ml of 1,4-dioxane together with V-501(4,4'-azobis(4-cyanovaleric acid)), and after reaction at 75°C for 18 h, PAA₄₀₀ was obtained.

400 equivalents of poly(ethylene glycol) methyl ether acrylate (PM) (Mₙ=480) relative to 0.8 g of PAA₄₀₀ was dissolved in 30 ml of DMF together with AIBN, and after reaction at 75 °C for 18 h, P(AA₄₀₀-b-PM₄₀₀) (b-type) was obtained.

### Preparation of positive electrode

### Comparative Example 2

Sulfur (S₈) and Ketjen Black (KB) were mixed at a weight ratio of 7:3, ground in a mortar and thermally treated at 155°C for 30 minutes to produce a sulfur-carbon composite (KB/S).

The resulting KB/S, a polyacrylic acid (PAA) binder and a conductive material (Super P) were mixed at a weight ratio of 80:10:10, and 3 wt% of PVA dispersant was added, and mixed in water using a thinky mixer to prepare a positive electrode slurry.

The as-prepared positive electrode slurry was applied to an aluminum foil by doctor blade coating to a thickness of 200 µm, and dried at 50°C for 14 h to obtain a positive electrode.

### Comparative Example 3

Except that the binder (P(AA₄₀₀-b-PM₄₀₀) (b-type)) prepared in Comparative Example 1 was used as a binder and the positive electrode slurry was coated up to 350 µm, a positive electrode was obtained by the same method as Comparative Example 2.

### Example 5

Except that the binder (P(AA₄₀₀-b-PM₄₀₀)) prepared in Example 1 was used as a binder and the positive electrode slurry was coated up to 350 µm, a positive electrode was obtained by the same method as Comparative Example 2.

### Example 6

Except that the binder (P(AA₄₀₀-b-PM₄₀₀)-Li) prepared in Example 2 was used as a binder and the positive electrode slurry was coated up to 350 µm, a positive electrode was obtained by the same method as Comparative Example 2.

### Example 7

Except that the binder (P(AA₂₀₀-b-PM₆₀₀)) prepared in Example 3 was used as a binder and the positive electrode slurry was coated up to 350 µm, a positive electrode was obtained by the same method as Comparative Example 2.

### Example 8

Except that the binder (P(AA₂₀₀-b-PM₆₀₀)-Li) prepared in Example 4 was used as a binder and the positive electrode slurry was coated up to 350 µm, a positive electrode was obtained by the same method as Comparative Example 2.

### Preparation of coin-type lithium secondary battery

As a positive electrode, the positive electrode of each of Comparative Example 2, Comparative Example 3 and Examples 5 to 8 was used, and as a negative electrode, a 100 µm-thick lithium metal was prepared.

The positive electrode and the negative electrode were placed on opposite sides with a polypropylene separator interposed therebetween to prepare an electrode assembly, and in this instance, the separator has a thickness of 25 µm and a porosity of 41 vol%.

The as-prepared electrode assembly was placed in a coin-type case, and an electrolyte solution was injected at an El/S ratio of 50 µl/mgₛ to manufacture a coin-type battery, and in this instance, the electrolyte solution includes 1 M lithium salt (LiTFSI) dissolved in a solvent containing a 1:1 (v/v) mixture of dioxolane and dimethoxyethane (DME).

### Surface observation of positive electrode

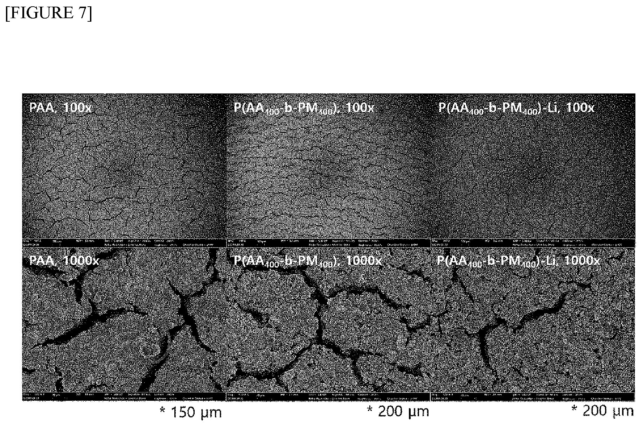

FIG. 7 shows surface observation results in SEM images of the positive electrodes prepared using different binders.

In FIG. 7, the SEM image on the left side shows the positive electrode manufactured by the same method as the positive electrode of Comparative Example 2 manufactured using PAA, and the positive electrode was manufactured by coating the positive electrode slurry to the thickness of 150 µm and drying it. The SEM image at the center shows the positive electrode manufactured by the same method as Example 1, and the positive electrode was manufactured by coating the positive electrode slurry to the thickness of 200 µm and drying it. The SEM image on the right side shows the positive electrode manufactured by the same method as Example 2, and the positive electrode was manufactured by coating the positive electrode slurry to the thickness of 200 µm and drying it.

As shown in FIG. 7, the positive electrodes including the binders of Examples 1 and 2 were thicker, but binder agglomeration was only observed on the surface of the thinner positive electrode formed using PAA.

Through this, it was inferred that the use of the binder according to an embodiment of the present disclosure may improve distribution uniformity of the binder within the positive electrode, thereby further improving electrical performance of the positive electrode.

In particular, PAA used in Comparative Example 2 includes -COOH in all monomers, and a dimer is formed by hydrogen bonding for each -COOH, while in the case of Examples 1 and 2 which are block copolymer binders of polyacrylic acid and polyalkyl methacrylate, their effects are attributed to a larger number of -COOH that is located adjacent to the polyethylene glycol block included in the polyalkyl methacrylate block and interacts with lithium polysulfides and polyethylene glycol having the ability to strongly adsorb lithium polysulfides.

### Evaluation of properties of coin-type lithium secondary battery

Each of the as-prepared coin-type lithium secondary batteries was discharged one cycle at a 0.1 C rate in a range of 2.5 V to 1.8 V at room temperature (25°C), charged and discharged two cycles at a 0.1 C rate in a range of 1.8 V to 2.5 V, then charged and discharged three cycles at a 0.2 C rate in a range of 1.8 V to 2.5 V, and charge and discharge cycles were repeated at a 0.5 C rate.

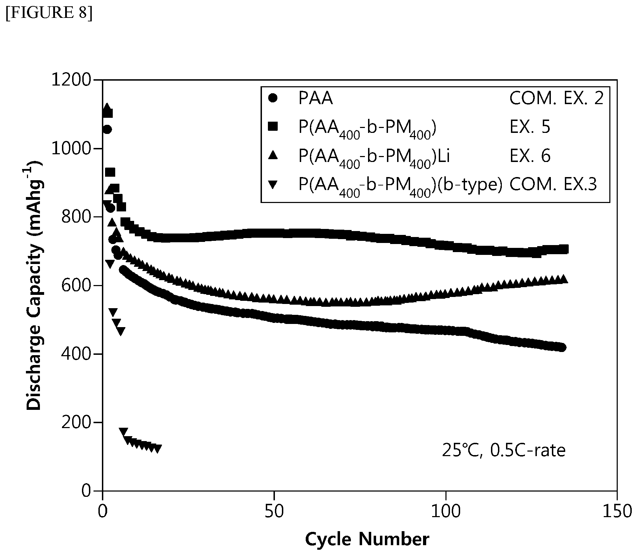

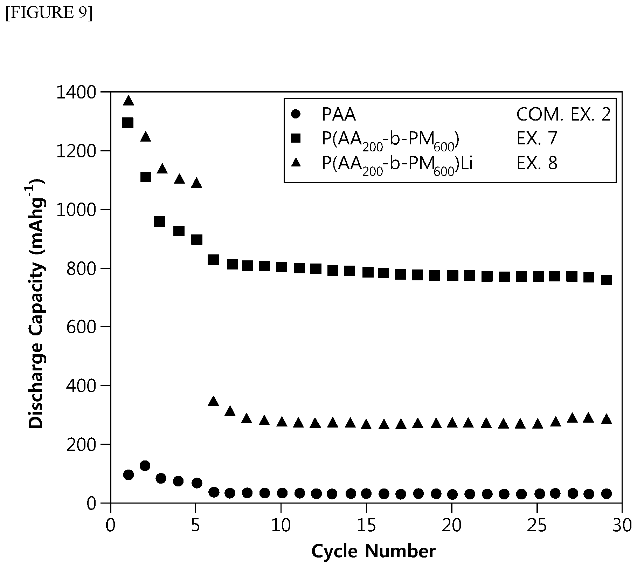

FIG. 8 (134 cycles) shows a discharge capacity graph of each of the batteries using the positive electrodes of Comparative Example 2, Comparative Example 3, Example 5 and Example 6 after repeated 134 cycles at a 0.5C rate, and FIG. 9 (29 cycles) shows a discharge capacity graph of each of the batteries using the positive electrodes of Comparative Example 2, Example 7 and Example 8 after repeated 29 cycles.

TABLES 1 and 2 below show measurements of capacity retention relative to the initial capacity (0.5 C rate 1 cycle) after 134 cycles or 29 cycles, respectively.

**TABLE 1**

| | Type of binder | Sulfur loading (mg/cm²) | Cycle number (cycles) | Capacity retention (%) (@ 0.5C rate) |
|---|---|---|---|---|
| Comparative Example 2 | PAA | 1.50 | 134 | 34.86 |
| Example 5 | P(AA₄₀₀-b-PM₄₀₀) | | | 58.72 |
| Example 6 | P(AA₄₀₀-b-PM₄₀₀)-Li | | | 51.46 |

**TABLE 2**

| | Type of binder | Sulfur loading (mg/cm²) | Cycle number (cycles) | Capacity retention (%) (@ 0.5C rate) |
|---|---|---|---|---|
| Comparative Example 2 | PAA | 3.17 | 29 | 2.62 |
| Example 7 | P(AA₂₀₀-b-PM₆₀₀) | | | 63.11 |
| Example 8 | P(AA₂₀₀-b-PM₆₀₀)-Li | | | 23.67 |

According to FIGS. 8 and 9 and TABLES 1 and 2, it was confirmed that the use of the binder according to an embodiment of the present disclosure increases the discharge capacity of the battery and achieves high capacity retention.

Specifically, according to FIG. 8, it was confirmed that the positive electrode manufactured by RAFT polymerization reaction but using the binder containing the aromatic functional group at the outermost terminal end had a poor effect due to a reduction in initial capacity. In addition, referring to FIGS. 8 and 9, it was confirmed that the use of PAA as the positive electrode binder reduces battery capacity, whereas the use of the binders of Examples 7 and 8 according to an embodiment of the present disclosure dramatically improves battery capacity. Presumably, it is attributed to suppressed dissolution of lithium polysulfides and improved electrical conductivity by the binder.

### Calculation of the number of monomers in binder

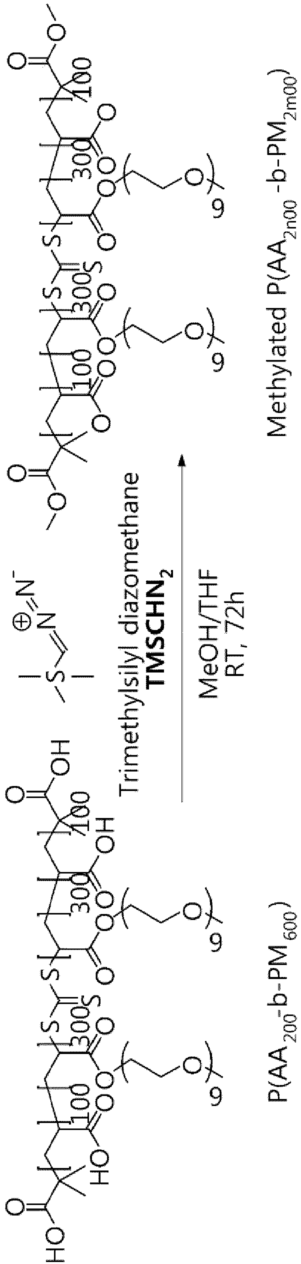

To measure each of the number average molecular weight and the weight average molecular weight of the binders prepared in Example 1 (P(AA₄₀₀-b-PM₄₀₀)) and Example 3 (P(AA₂₀₀-b-PM₆₀₀)), methylation was performed by reaction at room temperature (25°C) for 72 hours using trimethylsilyl diazomethane (TMS CHN₂) under MeOH/THR reaction conditions.

The number average molecular weight (Mn) of the methylated binder of Example 1 was 2472 g/mol, and the weight average molecular weight (Mw) was 2486 g/mol (PDI = 1.005) when measured using THF-GPC. In addition, the molecular weight (Mn) of the binder of Example 3 was 21,000 g/mol, and the weight average molecular weight (Mw) was 27,000 g/mol (PDI = 1.3) when measured by the same method.

Considering that the conversion ratio of Example 1 is 12.1% and the conversion ratio of Example 3 is 6.6%, when the conversion ratio of Example 1 is 100%, the theoretical weight average molecular weight of 221,106.39 g/mol is obtained. From this, based on the above-described experiments, to obtain the binder with the weight average molecular weight of 300,000 g/mol to control the viscosity of the binder in the positive electrode slurry, it was calculated that it may be more desirable to use 1,000 to 1,100 acrylic acid monomers and 1,000 to 1,100 poly(ethylene glycol) methyl ether acrylate monomers and achieve the conversion ratio of 50% or more.

## Claims

1. A binder for a lithium secondary battery, comprising:
a thiocarbonyl thio functional group represented by the following Formula 1;
a first polyalkyl methacrylate derived block covalently bonded to one end of the thiocarbonyl thio functional group;
a second polyalkyl methacrylate derived block covalently bonded to the other end of the thiocarbonyl thio functional group;
a first polyacrylic acid derived block covalently bonded to an end of the first polyalkyl methacrylate derived block; and
a second polyacrylic acid derived block covalently bonded to an end of the second polyalkyl methacrylate derived block,
wherein an organic functional group at an outermost terminal end includes an aliphatic functional group:

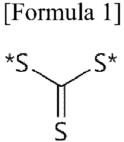

2. The binder for the lithium secondary battery according to claim 1,
wherein at least one carboxyl group (-COOH) in the first polyacrylic acid derived block and the second polyacrylic acid derived block includes a lithium-substituted carboxyl group (-COO⁻Li⁺).

3. The binder for the lithium secondary battery according to claim 1,
wherein the first polyacrylic acid derived block and the second polyacrylic acid derived block include each independently 50 to 1500 acrylic acid repeating structures.

4. The binder for the lithium secondary battery according to claim 1,
wherein the first polyalkyl methacrylate derived block and the second polyalkyl methacrylate derived block include each independently 50 to 1500 alkyl methacrylate repeating structures.

5. The binder for the lithium secondary battery according to claim 1,
wherein the alkyl included in at least one of the first polyalkyl methacrylate derived block or the second polyalkyl methacrylate derived block includes at least one of a polyethylene glycol repeating unit, a polypropylene glycol repeating unit or a polyethylene glycol-polypropylene glycol repeating unit.

6. The binder for the lithium secondary battery according to claim 5,
wherein the alkyl includes 1 to 30 polyethylene glycol repeating units.

7. The binder for the lithium secondary battery according to claim 1,
wherein the organic functional group at the outermost terminal end includes a lithium-substituted carboxyl group (-COO⁻Li⁺).

8. The binder for the lithium secondary battery according to claim 1,
wherein a pH of a dispersion of the binder for the lithium secondary battery in water is in a range of 6.2 to 7.8.

9. A method for manufacturing an electrode for a lithium secondary battery, the method comprising:
applying a slurry to at least one surface of a current collector and drying the slurry to obtain the electrode, the slurry including a mixture of the binder according to any one of claims 1 to 8, a sulfur-based compound and a conductive carbon material in an aqueous solvent.

10. The method for manufacturing the electrode for the lithium secondary battery according to claim 9,
wherein the method comprises obtaining the binder through a polymerization reaction of a reversible addition-fragmentation chain transfer (RAFT) initiator including an aliphatic functional group and a thiocarbonyl thio functional group, an alkyl methacrylate and an acrylic acid.

11. The method for manufacturing the electrode for the lithium secondary battery according to claim 10, before the polymerization reaction, further comprising:
preparing the RAFT initiator as a mixture of carbon disulfide (CS₂), trihalomethane and tetraalkylene ammonium bisulfate.

12. The method for manufacturing the electrode for the lithium secondary battery according to claim 10,
wherein the RAFT initiator includes S,S'-bis(R,R'-dimethyl-R"-acetic acid)-trithiocarbonate (BDAAT).

13. The method for manufacturing the electrode for the lithium secondary battery according to claim 9,
wherein the method comprises thermally treating a mixture of the sulfur-based compound and the conductive carbon material to obtain a sulfur-carbon composite, and
wherein the slurry is obtained by mixing the sulfur-carbon composite with the binder in the aqueous solvent.

14. The method for manufacturing the electrode for the lithium secondary battery according to claim 9,
wherein the obtained electrode includes the current collector and an active material layer present on at least one surface of the current collector, and
wherein the active material layer has a thickness of 250 µm or more.

15. An electrode for a lithium secondary battery, comprising:
the binder according to any one of claims 1 to 8;
a sulfur-based compound; and
a conductive carbon material.

16. A lithium secondary battery comprising the electrode according to claim 15.
